# EUROPEAN PATENT SPECIFICATION

(11) **EP 0 907 058 B1**
(45) Date of publication and mention of the grant of the patent: **19.05.2004**
(21) Application number: 98308043.3
(22) Date of filing: 02.10.1998
(51) Int. Cl.: F25B 49/02, H02K 5/22, H02K 17/30, H02K 11/04

(54) **A terminal box for a refrigeration compressor**
Anschlusskasten für einen Kühlverdichter
Boîte à terminaux pour un compresseur frigorifique

(30) Priority: 03.10.1997 GB 9721091
(43) Date of publication of application: 07.04.1999
(73) Proprietor: Arctic Circle Limited, Hereford HR2 6JL (GB)
(72) Inventor: Gittoes, Edwin Arthur, Near Ross-on-Wye, Hertfordshire (GB)
(74) Representative: Jones, Graham H.

(56) References cited:
- EP-A- 0 376 498
- US-A- 3 753 043
- US-A- 4 038 061
- US-A- 4 081 636
- US-A- 4 084 406
- US-A- 4 281 358
- US-A- 4 990 057
- US-A- 5 477 115
- US-A- 5 564 285
- US-A- 5 585 990

## Description

This invention relates to a terminal box for a refrigeration compressor. The refrigeration compressor is for refrigeration apparatus.

Refrigeration apparatus for refrigerated rooms, large refrigerators and air conditioning is well known. The refrigeration apparatus is operated by a refrigeration compressor. The refrigeration compressors are designed to operate over a wide range of refrigeration and ambient temperatures, in dependence upon desired applications. The known refrigeration apparatus is traditionally controlled from a remote control panel. The remote control panel comprises electrical and electronic components sourced from different sources. These components are frequently assembled on site. It is often inconvenient for the control panel to be a remote control panel. It is also often inconvenient to have to assemble various electrical and electronic components on site.

US-A-4084406 discloses a terminal box for a refrigeration compressor, the refrigeration compressor being a refrigeration compressor for refrigeration apparatus, and the terminal box comprising control means for automatically controlling the operation of the refrigeration compressor. The control means is a solid state control means which comprises a first timer. The first timer is for controlling the starting of a motor of the refrigeration compressor. The motor is such that it has a winding and an armature. The timer is such to ensure that during start up of the motor, the windings are only partly energised until such time as the armature is rotating sufficiently fast for the windings to be fully energised without damage being caused to the motor.

US-A-4081636 discloses a differential pressure cut out switch with time delay. However, the time delay is not adjustable and the purpose of the time delay is not defined.

It is an aim of the present invention to obviate or reduce the above mentioned problems.

Accordingly, the present invention provides a terminal box for a refrigeration compressor, the refrigeration compressor being a refrigeration compressor for refrigeration apparatus, and the terminal box comprising control means for automatically controlling the operation of the refrigeration compressor, the control means being a solid state control means which comprises a first timer, the first timer being for controlling the starting of the motor of the refrigeration compressor, the motor being such that it has windings and an armature, and the first timer being such as to ensure that during start up of the motor, the windings are only partly energised until such time as the armature is rotating sufficiently fast for the windings to be fully energised without damage being caused to the motor, and the terminal box being characterised in that the solid state control means comprises at least a second timer, the second timer being for providing an adjustable time delay for at least one oil pressure differential switch in order to control the period before the oil pressure differential switch is able to be effective whereby refrigerant which is mixed with oil is removed from the oil as refrigerant gas and the oil is then able to provide optimum lubrication for the refrigeration compressor.

By providing the terminal box on the refrigeration compressor, the refrigeration apparatus can simply and easily be automatically controlled from the very heart of the refrigeration apparatus, namely the refrigeration compressor. There is no need to have a remote control panel. Still further, the terminal box can be factory assembled so that it can be mounted on and supplied by the original refrigeration compressor manufacturer. There is no need for time consuming assembly on site requiring specialised assembly engineers.

If desired, the terminal box may include further timers for preventing short cycling of the refrigeration compressor due to thermal protection devices embedded in the windings of the electric motor of the refrigeration compressor.

The terminal box may be one in which the second timer provides the adjustable time delay for two of the oil pressure differential switches, one being a low oil pressure differential switch and the other being a high oil pressure differential switch.

The motor which is controlled by the first timer may be a part wind motor. Alternatively, the motor which is controlled by the first timer may be a star delta motor.

The terminal box may be one in which the control means includes alarm means, and diagnostic means for diagnosing after operation of the alarm means while the alarm means is activated.

Usually, the diagnostic means will include a display assembly.

Advantageously, the diagnostic means is operated by a hand held diagnostic unit. Part of the diagnostic means may be in the hand held diagnostic unit.

The terminal box may include a data logger. The data logger may thus provide a record of operation of the control means including the occurrence of faults.

The present invention also provides a refrigeration compressor having one of the terminal boxes.

The present invention still further provides refrigeration apparatus comprising one of the refrigeration compressors.

An embodiment of the invention will now be described solely by way of example and with reference to the accompanying drawings in which:
Figure 1 is a diagrammatic view of refrigeration apparatus including a refrigeration compressor which is provided with a terminal box;
Figure 2 is an exploded perspective view of the terminal box;
Figure 3 shows how the terminal box fits in place on the refrigeration compressor;
Figure 4 shows in block schematic form the structure of control means for automatically controlling the operation of the refrigeration compressor;
Figure 5 is a block diagram showing the operation of software forming part of the control means;
Figure 6 is a block diagram of the controller means and shows also in table form inputs and outputs;
Figure 7 shows the physical structure of the control means and illustrates its solid state nature; and
Figure 8 shows a display assembly with typical displays.

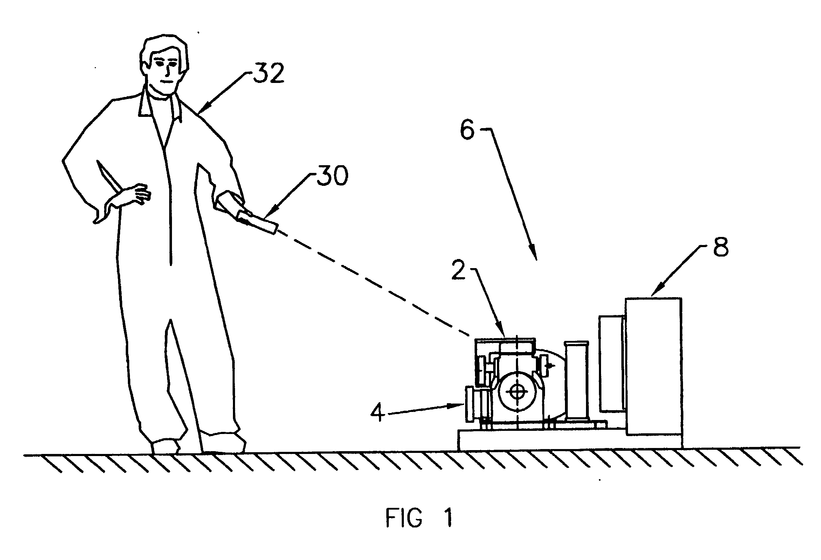

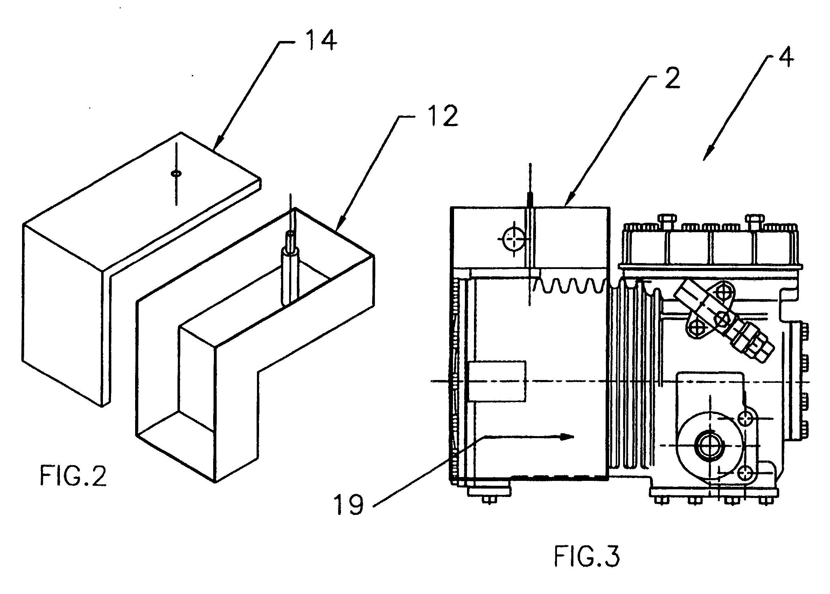

Referring to Figures 1 and 3, there is shown a terminal box 2 for a refrigeration compressor 4. The refrigeration compressor 4 forms part of refrigeration apparatus 6. The refrigeration apparatus 6 includes a heat exchange device 8. Apart from the terminal box 2, the general construction of the refrigeration compressor 4 and the refrigeration apparatus 6 is well known and so it will not be described again in detail.

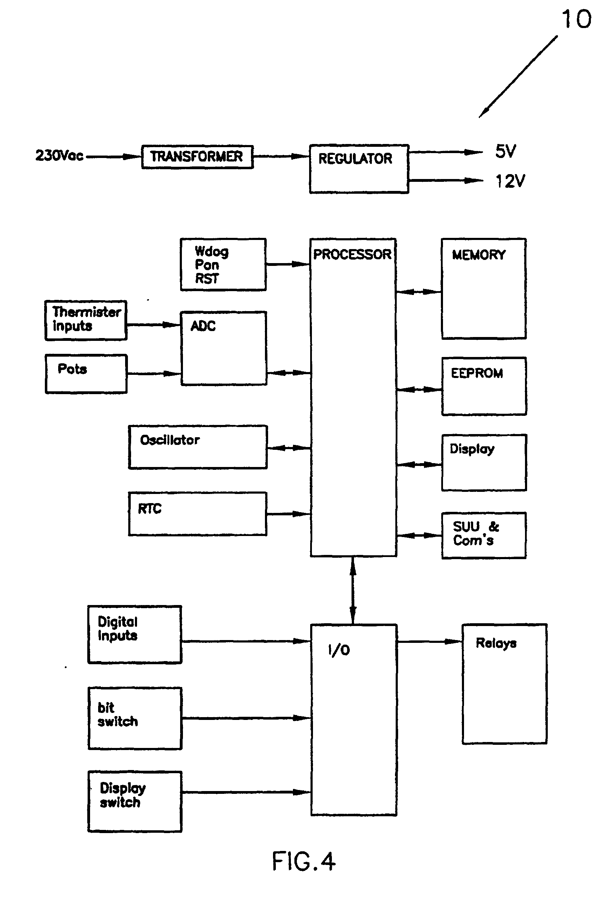

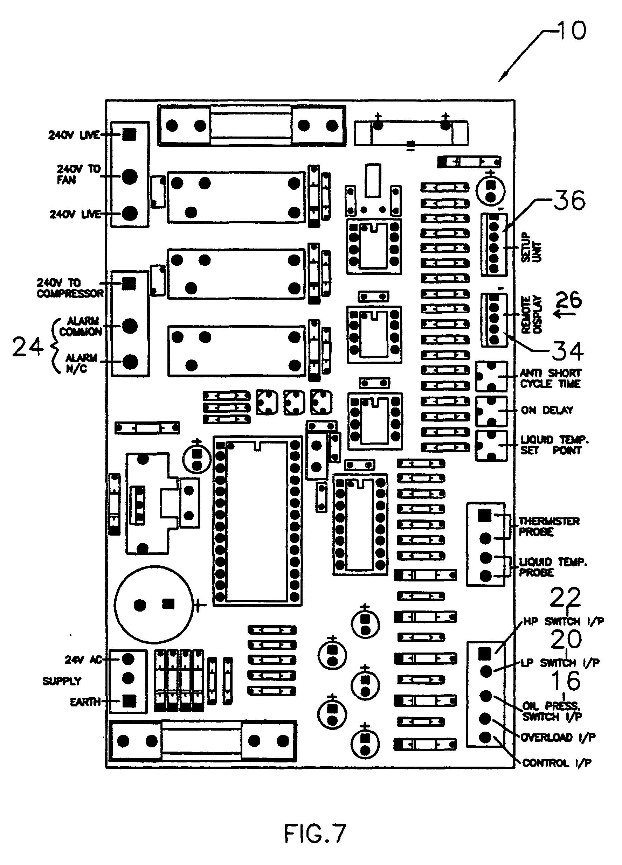

The terminal box 2 comprises control means 10, various parts of which are shown in Figures 4 - 7. The control means 10 is for automatically controlling the operation of the refrigeration compressor 4. As best appreciated from Figure 7, the control means 10 is a solid state control means.

The terminal box 2 is a right-angled terminal box 2 as can best be appreciated from Figure 2. The terminal box 2 comprises a body 12 which contains the control means 10 (not shown in Figure 2) and a lid 14 for closing the body 2.

The control means 10 comprises a second timer 16 and a first timer 18.

The second timer 16 is for providing an adjustable time delay to two oil pressure differential switches, one being a low oil pressure differential switch 20 and the other being a high oil pressure differential switch 22, see Figure 7.

The first timer 18 is for controlling the starting of a motor 19 of the refrigeration compressor 4. The motor 19 is such that it has windings and an armature. The first timer 18 is such that during start up of the motor 19, the windings receive only part of the maximum available energy until such time as the armature is rotating sufficiently fast for the windings to receive the maximum available current without damage being caused to the motor 19. The motor 19 may be a part wind motor or, alternatively, it may be a star delta motor.

The control means 10 includes alarm means 24 and diagnostic means 26. The diagnostic means 26 is for diagnosing after operation of the alarm means 24, while the alarm means 24 is activated. The diagnostic means 26 includes a remote display assembly 28. The display assembly 28 may be in a hand held diagnostic unit 30 as shown in Figure 1. In Figure 1, the hand held diagnostic unit 30 is shown being held by an engineer 32 who is interrogating the control means 10 in the terminal box 2. Figure 7 shows a terminal connection device 34 for providing an appropriate display in the hand held diagnostic unit 30.

The diagnostic means 26 includes a data logger for providing a record of operation of the control means 10.

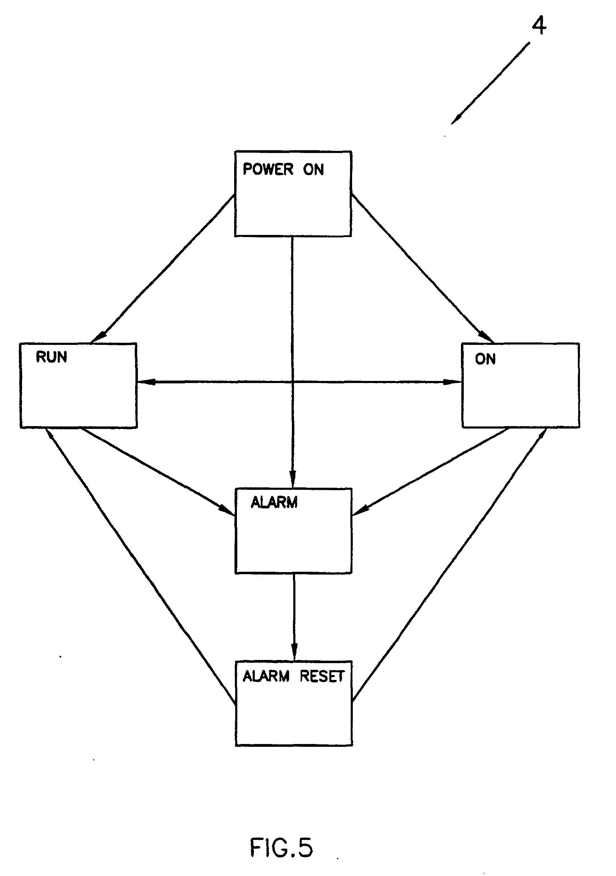

Figure 4 shows in block diagram form the operation of the control means 10. Figure 5 shows a flow chart of software used to run the control means 10. Figures 4 and 5 with their explanatory wording are believed to be self-explanatory.

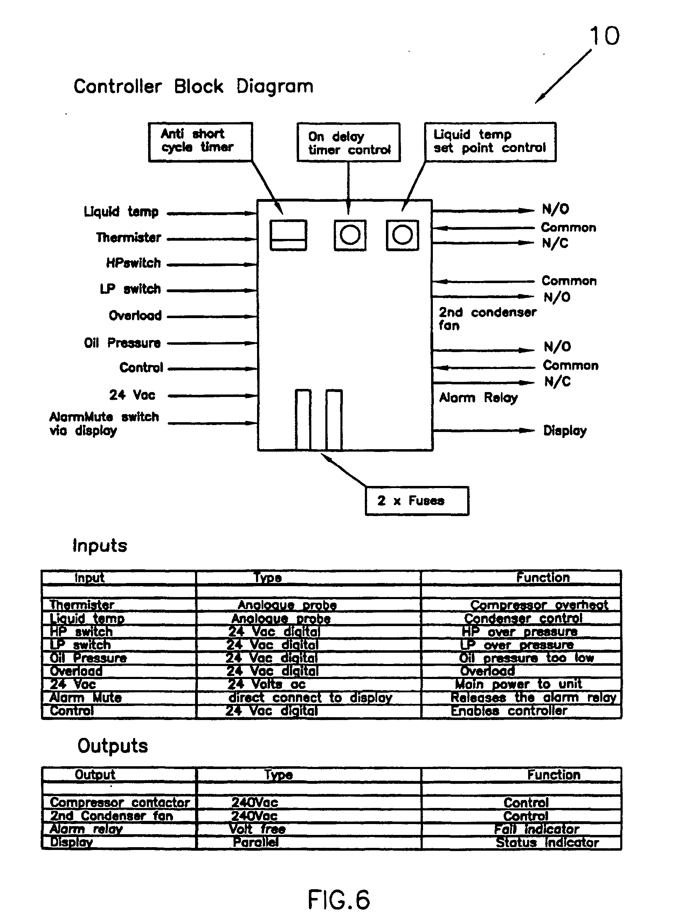

Figure 6 shows in block diagram form with explanatory wording the construction and operation of the control means 10. Figure 7 shows an example of a specific solid state layout for the control means 10. The various parts in Figures 6 and 7 have been marked for ease of understanding. Figure 6 also gives input and output details in tabular form as shown, together with the type of the input and output, and the function.

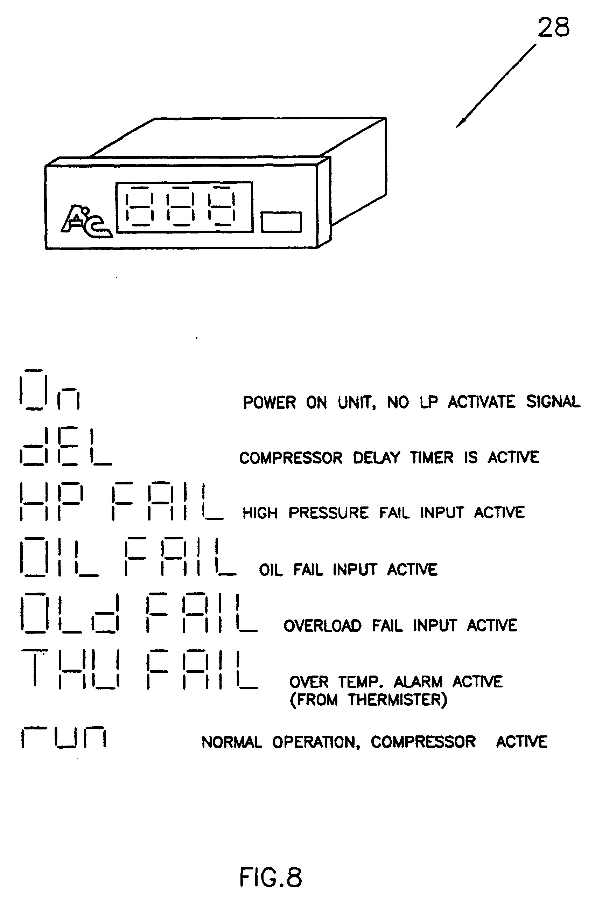

Figure 8 shows a display assembly 28 and shows typical displays that may be seen by the display assembly 28. The meaning of the displays have been given in the right hand column shown in Figure 8 for ease of understanding.

The terminal box 2 shown in the drawings with its control means 10 replaces the traditional remote control panel that has previously been used for controlling the operation of refrigeration compressors such as the refrigeration compressor 4. The control means 10 is arranged to be automatic, even to the extent that it has the alarm means 24, together with the diagnostic means 26 for diagnosing why the alarm means tripped. The control means 10 has the ability to down load to computer apparatus or a modem. The hand held diagnostic unit 30 provides a very convenient way of interrogating the control means 10. The terminal box 2 with its control means 10 can be fitted to the refrigeration compressor 4 at the time when the refrigeration compressor 4 is being made. Thus the fitting can be effected by the manufacturer of the refrigeration compressor 4 and there is then no need for parts being assembled on site as currently occurs. In most existing control systems, the timer for controlling the oil differential pressure and the timer for starting the motor are separate add on switches which come from different sources, they are not solid state devices, and they have to be assembled on site. The control means 10 in the terminal box 2 of the present invention requires no assembly as occurs with previous known control means and the control means 10 simply has to be set and adjusted via a set up unit 36 as shown in Figure 7.

The second timer 16 operates to provide an adjustable time delay before resetting the oil pressure differential switches 20 and 22. The requirement for such a timer 16 is because, following the operation of the either the low oil pressure differential switch 20 or the high oil pressure differential switch 22, the oil within the refrigeration compressor 6 becomes temporarily contaminated with liquid refrigerant. This causes frothing and general dilution of the oil as a lubricant. By delaying the operation of the switches 20, 22, time is given for the oil in the refrigeration compressor 4 to stabilize as the liquid refrigerant boils off into refrigerant gas. This leaves good pure oil in the refrigeration compressor 4, for providing required lubrication.

Refrigeration compressors 4 are generally designed to operate over a wide range of refrigeration and ambient temperatures, in dependence upon the actual intended use of the refrigeration apparatus 6. An appropriate time span before it is safe to restart the refrigeration compressor 4 may be from 6 - 120 seconds. The second timer 16 thus has to be adjustable in order to be able to provide the required time delay.

It is to be appreciated that the embodiment of the invention described above with reference to the accompanying drawings has been given by way of example only and that modifications within the scope of the claims may be effected. Thus, for example, the control means 10 may be different from that shown in the drawings but still falling under the scope of the claims.

## Claims

1. A terminal box (2) for a refrigeration compressor (4), the refrigeration compressor (4) being a refrigeration compressor (4) for refrigeration apparatus (6), and the terminal box (2) comprising control means (10) for automatically controlling the operation of the refrigeration compressor (4), the control means (10) being a solid state control means (10) which comprises a first timer (18), the first timer (18) being for controlling the starting of a motor (19) of the refrigeration compressor (4), the motor (19) being such that it has windings and an armature, and the first timer (18) being such as to ensure that during start up of the motor (19), the windings are only partly energised until such time as the armature is rotating sufficiently fast for the windings to be fully energised without damage being caused to the motor (19), and the terminal box (2) being **characterised in that** the solid state control means (10) comprises at least a second timer (16), the second timer (16) being for providing an adjustable time delay for at least one oil pressure differential switch (20,22) in order to control the period before the oil pressure differential switch (20,22) is able to be effective whereby refrigerant which is mixed with oil is removed from the oil as refrigerant gas and the oil is then able to provide optimum lubrication for the refrigeration compressor (4).

2. A terminal box (2) according to claim 1 and including further timers for preventing short cycling of the refrigeration compressor (4) due to thermal protection devices embedded in the windings of the motor (19) of the refrigeration compressor (4).

3. A terminal box (2) according to claim 1 or claim 2 in which the second timer (16) provides the adjustable time delay for two of the oil pressure differential switches (20,22), one being a low oil pressure differential switch (20) and the other being a high oil pressure differential switch (22).

4. A terminal box (2) according to any one of the preceding claims in which the motor (19) which is controlled by the first timer (18) is a part wind motor.

5. A terminal box (2) according to any one of claims 1 - 3 in which the motor (19) which is controlled by the first timer (18) is a star delta motor.

6. A terminal box (2) according to any one of the preceding claims in which the control means (10) includes alarm means (24), and diagnostic means (26) for diagnosing after operation of the alarm means (24) while the alarm means (24) is activated.

7. A terminal box (2) according to claim 6 in which the diagnostic means (26) includes a display assembly (28).

8. A terminal box (2) according to claim 6 or claim 7 in which the diagnostic means (26) is operated by a hand held diagnostic unit (30).

9. A terminal box (2) according to any one of the preceding claims and including a data logger.

10. A refrigeration compressor (4) having a terminal box (2) according to any one of the preceding claims.

11. Refrigeration apparatus (6) comprising a refrigeration compressor (4) according to claim 10.

## Patentansprüche

1. Anschlusskasten (2) für einen Kältemittelverdichter (4), wobei der Kältemittelverdichter (4) ein Kältemittelverdichter (4) für eine Kühlvorrichtung (6) ist, und wobei der Anschlusskasten (2) eine Steuereinrichtung (10) zum automatischen Steuern der Funktionsweise des Kältemittelverdichters (4) umfasst, wobei die Steuereinrichtung (10) eine monolithische Steuereinrichtung (10) ist, die einen ersten Zeitgeber (18) umfasst, wobei der erste Zeitgeber (18) dazu dient, das Anlassen eines Motors (19) des Kältemittelverdichters (4) zu steuern, wobei der Motor (19) dergestalt ist, dass er Wicklungen und einen Anker hat, und wobei der erste Zeitgeber (18) sicherstellen kann, dass die Wicklungen beim Anlassen des Motors (19) nur teilweise erregt werden, bis sich der Anker schnell genug dreht, damit die Wicklungen vollständig erregt werden können, ohne dass der Motor (19) dadurch beschädigt wird, und wobei der Anschlusskasten (2) **dadurch gekennzeichnet ist, dass** die monolithische Steuereinrichtung (10) mindestens einen zweiten Zeitgeber (16) umfasst, wobei der zweite Zeitgeber (16) dazu dient, eine einstellbare Zeitverzögerung für mindestens einen Öldruckunterschiedschalter (20, 22) bereitzustellen, um den Zeitraum, bevor der Öldruckunterschiedschalter (20, 22) wirksam sein kann, zu steuern, wodurch mit Öl gemischtes Kältemittel als Kühlgas aus dem Öl entfernt wird und das Öl dann eine optimale Schmierung für den Kältemittelverdichter (4) bereitstellen kann.

2. Anschlusskasten (2) nach Anspruch 1 und mit weiteren Zeitgebern zum Verhindern kurzer Laufzeiten des Kältemittelverdichters (4) auf Grund von Wärmeschutzvorrichtungen, die in die Wicklungen des Motors (19) des Kältemittelverdichters (4) eingebettet sind.

3. Anschlusskasten (2) nach Anspruch 1 oder Anspruch 2, bei dem der zweite Zeitgeber (16) die einstellbare Zeitverzögerung für zwei der Öldruckunterschiedschalter (20, 22) bereitstellt, wobei einer ein Schalter (20) für einen niedrigen Öldruckunterschied ist und der andere ein Schalter (22) für einen hohen Öldruckunterschied.

4. Anschlusskasten (2) nach einem der vorhergehenden Ansprüche, bei dem der Motor (19), der durch den ersten Zeitgeber (18) gesteuert wird, ein Teilwicklungsmotor ist.

5. Anschlusskasten (2) nach einem der Ansprüche 1 bis 3, bei dem der Motor (19), der durch den ersten Zeitgeber (18) gesteuert wird, ein Sterndreieckmotor ist.

6. Anschlusskasten (2) nach einem der vorhergehenden Ansprüche, bei dem die Steuereinrichtung (10) eine Alarmeinrichtung (24) und eine Diagnoseeinrichtung (26) zur Fehlersuche nach Betätigung der Alarmeinrichtung (24) umfasst, während die Alarmeinrichtung (24) aktiviert ist.

7. Anschlusskasten (2) nach Anspruch 6, bei dem die Diagnoseeinrichtung (26) eine Anzeigebaugruppe (28) umfasst.

8. Anschlusskasten (2) nach Anspruch 6 oder Anspruch 7, bei dem die Diagnoseeinrichtung (26) durch eine handgehaltene Diagnoseeinheit (30) betätigt wird.

9. Anschlusskasten (2) nach einem der vorgehenden Ansprüche und mit einem Datenlogger.

10. Kältemittelverdichter (4) mit einem Anschlusskasten (2) nach einem der vorhergehenden Ansprüche.

11. Kühlvorrichtung (6) mit einem Kältemittelverdichter (4) nach Anspruch 10.

## Revendications

1. Boîtier terminal (2) pour un compresseur de réfrigération (4), le compresseur de réfrigération (4) étant un compresseur de réfrigération (4) pour un appareil de réfrigération (6), le boîtier terminal (2) comprenant un moyen de commande (10) pour contrôler automatiquement le fonctionnement du compresseur de réfrigération (4), le moyen de commande (10) étant un moyen de commande (10) à semi-conducteurs qui comprend un premier temporisateur (18), le premier temporisateur (18) étant destiné à contrôler le démarrage d'un moteur (19) du compresseur de réfrigération (4), le moteur (19) présentant des enroulements et un induit et le premier temporisateur (18) étant en mesure de garantir que pendant le démarrage du moteur (19), les enroulements ne sont alimentés que partiellement en énergie jusqu'au moment où l'induit tourne suffisamment vite pour que les enroulements soient alimentés complètement en énergie sans provoquer de dommage au moteur (19), le boîtier terminal (10) étant **caractérisé en ce que** le moyen de commande (10) à semi-conducteurs comprend au moins un deuxième temporisateur (16), le deuxième temporisateur (16) étant destiné à assurer un retard ajustable à au moins un commutateur différentiel (20, 22) de pression d'huile pour contrôler le laps de temps qui s'écoule avant que le commutateur différentiel (20, 22) de pression d'huile soit en mesure de fonctionner, le réfrigérant mélangé à l'huile étant enlevé de l'huile en tant que gaz réfrigérant, l'huile étant ensuite en mesure d'assurer une lubrification optimale du compresseur de réfrigération (4).

2. Boîtier terminal (2) selon la revendication 1 et comprenant d'autres temporisateurs pour empêcher le cyclage court du compresseur de réfrigération (4) dû à des dispositifs de protection thermique incorporés dans les enroulements du moteur (19) du compresseur de réfrigération (4).

3. Boîtier terminal (2) selon la revendication 1 ou la revendication 2, dans lequel le deuxième temporisateur (16) assure le retard ajustable pour deux des commutateurs différentiels (20, 22) de pression d'huile, dont l'un est un commutateur différentiel (20) de basse pression d'huile et l'autre un commutateur différentiel (22) de haute pression d'huile.

4. Boîtier terminal (2) selon l'une quelconque des revendications précédentes, dans lequel le moteur (19) qui est commandé par le premier temporisateur (18) est un moteur à démarrage sur une partie des enroulements.

5. Boîtier terminal (2) selon l'une quelconque des revendications 1 à 3, dans lequel le moteur (19) qui est commandé par le premier temporisateur (18) est un moteur à démarrage en triangle.

6. Boîtier terminal (2) selon l'une quelconque des revendications précédentes, dans lequel le moyen de commande (10) comprend un moyen d'alerte (24) et un moyen de diagnostic (26) qui établit un diagnostic après que le moyen d'alerte (24) a fonctionné et pendant que le moyen d'alerte (24) est activé.

7. Boîtier terminal (2) selon la revendication 6, dans lequel le moyen de diagnostic (26) comprend un ensemble d'affichage (28).

8. Boîtier terminal (2) selon la revendication 6 ou la revendication 7, dans lequel le moyen de diagnostic (26) est activé par une unité manuelle de diagnostic (30).

9. Boîtier terminal (2) selon l'une quelconque des revendications précédentes, qui comprend un enregistreur de données.

10. Compresseur de réfrigération (4) doté d'un boîtier terminal (2) selon l'une quelconque des revendications précédentes.

11. Appareil de réfrigération (6) qui comprend un compresseur de réfrigération (4) selon la revendication 10.
